Europäisches Patentamt

European Patent Office

Office européen des brevets

(11) Veröffentlichungsnummer: **0 455 150 A1**

# EUROPÄISCHE PATENTANMELDUNG

(21) Anmeldenummer: 91106759.3

(22) Anmeldetag: 26.04.91

(51) Int. Cl.⁵: **A22C  13/02**

(30) Priorität: 02.05.90 DE 4014062

(43) Veröffentlichungstag der Anmeldung:
**06.11.91 Patentblatt  91/45**

(84) Benannte Vertragsstaaten:
**AT BE CH DE DK ES FR GB GR IT LI NL SE**

(71) Anmelder: **Kollross, Günter**
**Am Wallerstädter Weg 20**
**W-6080 Gross Gerau-Dornheim(DE)**

(72) Erfinder: **Kollross, Günter**
**Am Wallerstädter Weg 20**
**W-6080 Gross Gerau-Dornheim(DE)**

(74) Vertreter: **Jochem, Bernd, Dipl.-Wirtsch.-Ing.**
**Patentanwälte Beyer & Jochem Postfach 17**
**01 45**
**W-6000 Frankfurt/Main(DE)**

(54) **Verfahren und Vorrichtung zur Bildung eines Endverschlusses an einer schlauchförmigen Verpackungshülle.**

(57) Das Verfahren dient zum Bilden eines Endverschlusses in Form eines Drillzopfs an einer zu einer Raupe gerafften, schlauchförmigen Verpackungshülle, insbesondere Wursthülle. Dabei wird an dem zu verschließenden Ende der Verpackungshülle (40) ein ungeraffter Hüllenabschnitt (34) gebildet. Ein erstes langgestrecktes Wickelelement (46) wird in die Verpackungshülle (40) bis hinter die ersten Raffalten eingeführt. Dann wird der ungeraffte Hüllenabschnitt (34) durch ein zweites langgestrecktes Wickelele-ment (48), welches kürzer ist als das erste Wickelelement (46), von außen an dieses herangeführt und längs einer axialen Mantellinie erfaßt. Daraufhin werden die Wickelelemente (46, 48) rotierend angetrieben und gleichzeitig axial vorgeschoben, wobei, vom freien Ende der Wickelelemente (46, 48) nach hinten fortschreitend, der Drillzopf erzeugt wird. Am Ende wird durch Zurückziehen der Wickelelemente (46, 48) ein Entlüftungskanal im Zentrum des Drillzopfs freigelegt.

FIG.7

EP 0 455 150 A1

Die Erfindung betrifft ein Verfahren zum Bilden eines Endverschlusses in Form eines Drillzopfs an einer zu einer Raupe gerafften, schlauchförmigen Verpackungshülle, insbesondere Wursthülle, wobei ein erstes langgestrecktes Wickelelement in das Innere der Verpackungshülle bis hinter die ersten Raffalten eingeführt, der äußerste Hüllenabschnitt zwischen dem ersten und einem zweiten langgestreckten Wickelelement längs einer axialen Mantellinie erfaßt wird und die Wickelelemente zur Bildung des Drillzopfs innerhalb der Verpackungshülle relativ zu dieser um ihre Längsachse gedreht, axial verschoben und nach Beendigung der Drehbewegung vom Drillzopf zurückgezogen werden.

Zu Raupen geraffte schlauchförmige Verpakkungshüllen der vorgenannten Art werden im großen Umfang vor allem bei der Wurstherstellung auf Füllautomaten verwendet. Durch vorhergehendes Verschließen eines Hüllenendes ist es möglich, nach dem Aufstecken der Verpackungshülle auf das Füllrohr sofort mit dem Füllen zu beginnen. Dabei ist es erwünscht, die Verpackungshülle am verschlossenen Ende zu enlüften, um die Entstehung eines Luftpolsters zu verhindern. Hierzu ist ein Endverschluß in Gestalt eines Drillzopfes geeignet, der einen Entlüftungskanal enthält.

Bei einem bekannten Verfahren zur Bildung eines solchen Endverschlusses (DE-OS 23 17 867) werden mehrere am vorderen Ende eines drehend antreibbaren zylindrischen Werkzeugträgers in Radialebenen angebrachte keilförmige Drallplatten mit ihren auf einer Kegelfläche liegenden Vorderkanten gegen das vordere Ende der gerafften Verpackungshülle gedrückt und üben dadurch eine umlaufende Kraft auf das dortige Schlauchhüllenvordere Ende der gerafften Verpackungshülle gedrückt und üben dadurch eine umlaufende Kraft auf das dortige Schlauchhüllenmaterial aus, durch welche die letzten Falten der gerafften Verpackungshülle innerhalb derselben fortschreitend ausgezogen und um ein in die Verpackungshülle vorstehendes langgestrecktes, dünnes Formungselement verdrillt werden sollen, um einen dicht zusammengedrehten Knoten aus Schlauchhüllenmaterial um das Formungselement zu bilden. Wie dies mit den gezeigten und beschriebenen Mitteln tatsächlich geschieht, wird jedoch nicht angegeben.

Nach einem anderen bekannten Verfahren gemäß DE-PS 34 05 445 wird mittels einer Zange der vordere Teil einer Raupe gegenüber dem Rest verdrillt und dadurch ein dichter Verschluß ohne Entlüftungsöffnung erzeugt.

Bei einem weiteren bekannten Verfahren zum Bilden eines Endverschlusses in Gestalt eines Drillzopfes innerhalb einer raupenförmig gerafften Verpackungshülle (US-PS 4 536 175) trägt eine drehend antreibbare Welle zwei unterschiedlich lange, achsparallele Greiffinger, zwischen die das Ende der Verpackungshülle nach Ausziehen der letzten Falten von Hand eingeführt und in die Verpackungshülle geschoben wird. Hierauf wird ein undrehbarer Puffer mit seiner konischen Stirnfläche gegen das Ende der Verpackungshülle angestellt, und die Greiffinger werden zur Bildung eines Drillzopfes in Drehungen versetzt. Wie hierbei der gewünschte Entlüftungskanal im Drillzopf entsteht, ist der Beschreibung und Darstellung des Verfahrens und der Vorrichtung zu seiner Durchführung nicht zu entnehmen.

Schließlich ist auch bereits ein Verfahren zur Schaffung eines Endverschlusses in Gestalt eines einen Entlüftungskanal enthaltenden Drillzopfes an einer raupenförmig gerafften Verpackungshülle bekannt (DE-OS 31 41 782) und hat in der Praxis Eingang gefunden, bei dem im Unterschied zu den zuvor beschriebenen Verfahren ein langgestrecktes Formungselement von der Rückseite her durch die gesamte Verpackungshülle hindurchgeführt wird und die letzten Falten der Verpackungshülle durch von außen angreifende, drehend angetriebene Zangenbacken um das Formungselement verdrillt werden. Der dadurch ausserhalb der Verpackungshülle gebildete Drillzopf wird dann durch ein hülsenförmiges Element in die Verpackungshülle hineingestoßen. Auf diese Weise wird zwar ein einwandfreier Endverschluß mit dem gewünschten Entlüftungskanal erhalten. Das zur Anwendung gelangende Verfahren ist jedoch wegen der zusätzlichen Maßnahme, den Drillzopf in die geraffte Verpackungshülle hineinzustoßen, umständlich und zeitraubend, und seine Durchführung erfordert viel Raum und beträchtlichen konstruktiven Aufwand.

Aufgabe der Erfindung ist es, ein Verfahren der eingangs genannten Art zum Bilden eines Endverschlusses mit einem Entlüftungskanal an einer zu einer Raupe gerafften Verpackungshülle zu schaffen, das mit wenig Verfahrensschritten und vergleichsweise geringem konstruktiven Aufwand auf geringem Raum die sichere Ausbildung eines solchen Endverschlusses gewährleistet.

Die Erfindung löst diese Aufgabe dadurch, daß an dem zu verschließenden Ende der Verpackungshülle ein ungeraffter Hüllenabschnitt gebildet wird, welcher längs der axialen Mantellinie durch das zweite Wickelelement, das kürzer ist als das erste Wickelelement, von außen an dieses herangeführt wird, und daß die Wickelelemente während der Drehbewegung vorgeschoben werden, wobei innerhalb der Verpackungshülle, vom freien Ende der Wickelelemente nach hinten fortschreitend, der Drillzopf erzeugt und durch das Zurückziehen des längeren Wickelelements aus der durch das Verdrillen zusammengezogenen Öffnung ein Entlüftungskanal freigelegt wird.

Versuche haben ergeben, daß durch dieses Verfahren eine geraffte Verpackungshülle mit einem Endverschluß in Gestalt eines mit einer Entlüftungskanal versehenen Drillzopfes herstellbar ist, der bei sofortiger Einsatzbereitschaft dem Fülldruck insbesondere bei der Wurstherstellung zuverlässig standhält und ein Luft polster in der gefüllten Verpackungshülle dank dem einwandfrei gebildeten Entlüftungskanal verhindert.

Nach einem ersten Merkmal zur vorteilhaften Weiterbildung des erfindungsgemäßen Verfahrens wird der ungeraffte Hüllenabschnitt am Ende des Heranführens vom zweiten Wickelelement am ersten Wickelelement festgeklemmt. Hierdurch wird ein evtl. Gleiten des Schlauchhüllenmaterials zwischen den Wickelelementen bei der Bildung des Drillzopfes verhindert und die Gefahr von Beschädigungen der Schlauchhülle vermieden. Um andererseits die Wickelelemente aus dem Drillzopf ohne die Gefahr von Beschädigungen herausziehen zu können, wird die Klemmung am Ende der Drehbewegung der Wickelelemente zweckmäßig gelokkert.

Nach einem anderen Merkmal zur vorteilhaften Weiterbildung des erfindungsgemäßen Verfahrens wird das Drehen der Wickelelemente bereits während des Erfassens und Heranführens des ungerafften Hüllenabschnitts an das erste Wickelelement begonnen. Dadurch wird ein weicher Eingriff des äußeren Wickelelements am Hüllenmaterial erzielt. Demgegenüber wird das axiale Vorschieben der Wickelelemente erst nach dem Heranführen des ungerafften Hüllenabschnitts an das erste Wikkelelement eingeleitet, wenn das Material am Ende des kürzeren Wickelelements bereits abgedreht ist.

Noch ein weiteres Merkmal zur vorteilhaften Weiterbildung des erfindungsgemäßen Verfahrens besteht schließlich darin, daß der ungeraffte Hüllenabschnitt beim Raffen durch Beginn der Faltenlegung mit Abstand zum vorderen Ende des zu raffenden Hüllenmaterials gebildet wird. Dadurch entfallen besondere Maßnahmen zum Aufziehen und Glätten bereits gebildeter Falten.

Eine Vorrichtung, die zur Durchführung des neuen Verfahrens bestimmt ist, nachdem der ungeraffte Hüllenabschnitt bereits gebildet und die Verpackungshülle vor der Vorrichtung gegen Drehung und Axialverschiebung gehalten ist, hat eine Halteeinrichtung für die Raupe und einen gesteuert gegen die Halteeinrichtung verschieblichen, drehend antreibbaren, wellenförmigen Werkzeugträger, an dessen der Halteeinrichtung zugewandten Ende eine Zange angeordnet ist, zeichnet sich erfindungsgemäß dadurch aus, daß die Zange zwei ungleich lange Schenkel hat, von denen der längere Schenkel fest mit dem Werkzeugträger verbunden ist und mit dessen Drehachse im wesentlichen fluchtet, während der kürzere Schenkel von radial außen an den längeren Schenkel heranführbar ist, und daß zu einer vom freien Ende der Schenkel nach hinten fortschreitenden Bildung des Drillzopfs der Werkzeugträger mit der geschlossenen Zange gleichzeitig drehbar und axial vorschiebbar ist.

Vorteilhafte Ausgestaltungen einer solchen Vorrichtung ergeben sich aus den Unteransprüchen 7 bis 20.

Das erfindungsgemäße Verfahren und ein bevorzugtes Ausführungsbeispiel einer Vorrichtung zum Bilden des Drillzopfes nach diesem Verfahren werden nachstehend in Verbindung mit der Zeichnung näher erläutert. Es zeigen:

| | |
|---|---|
| Fig. 1 bis 4 | in stark vereinfachter perspektivischer Darstellung vier aufeinanderfolgende charakteristische Zustände beim Raffen eines Schlauchhüllenstrangs zu einer schließlich vom Strang abgeschnittenen und von einer Halteeinrichtung erfaßten raupenförmigen Verpackungshülle, |
| Fig. 5 bis 11 | charakteristische weitere Zustände in Gestalt von Längsschnitten bei der Weiterbehandlung der Verpackungshülle zur Bildung eines Endverschlusses in Form eines mit einem Entlüftungs kanal versehenen Drillzopfes, |
| Fig. 12 | die Stirnansicht einer Vorrichtung zur Bildung des Drillzopfes nach den Fig. 5 bis 11, |
| Fig. 13 | eine Draufsicht auf die Vorrichtung nach Fig. 12 in der Ebene XIII-XIII in Figur 12, |
| Fig. 14 | einen Längsschnitt durch die Vorrichtung nach Linie XIV-XIV in Fig. 12, |
| Fig. 14a | einen Ausschnitt aus Fig. 14 in größerem Maßstab, |
| Fig. 15 | einen Querschnitt durch die Vorrichtung nach Linie XV-XV in Fig. 14, |
| Fig. 16 | eine perspektivische Darstellung der Kurvenscheibe mit der Schlupfbremse und |
| Fig. 17 | ein Zeitdiagramm zur Veranschaulichung der Wirkungsweise der Verschließvorrichtung bei der Bildung des Endverschlusses. |

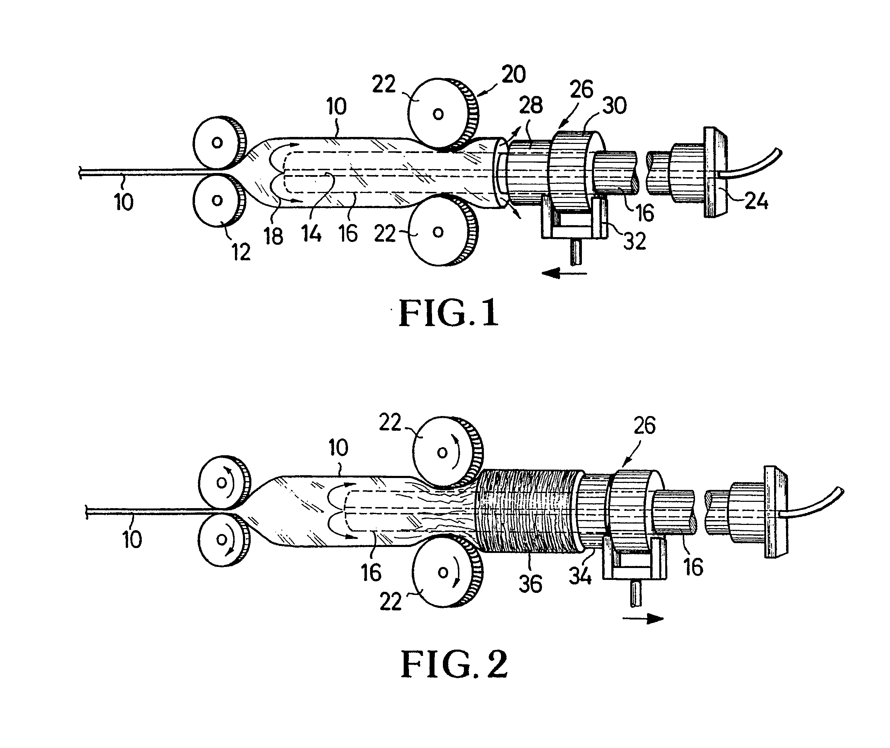

In den Fig. 1 bis 3 ist eine herkömmliche Raffvorrichtung zum Herstellen von zu Raupen gerafften Verpackungshüllen aus einem beliebig langen Schlauchhüllenstrang schematisch dargestellt. Der in flachem Zustand von einer (nicht gezeigten) Haspel kommende Schlauchhüllenstrang 10 passiert zunächst ein Quetschwalzenpaar 12, das die Schlauchhülle abdichtet. Hinter dem Quetschwalzenpaar 12 wird der Schlauchhüllenstrang 10 durch ein mit einer Bohrung 14 versehenes Raffrohr 16 geöffnet, indem durch die Bohrung 14 Blähluft zugeleitet und, wie bei 18 angedeutet, in den offenen Schlauchhüllenstrang 10 eingeblasen wird. Der aufgeblasene Schlauchhüllenstrang 10 passiert schließlich ein Raffwerkzeug 20, das mit zwei Raffrollen 22 schematisch angedeutet ist, die den Schlauchhüllenstrang bis zum Raffrohrumfang einschnüren und bei ihrer Drehung zugleich vorschieben.

Derartige Raffwerkzeuge sind bekannt. Anstelle der gezeigten zwei Raffrollen 22 können auch drei oder noch mehr Raffrollen an Hüllenumfang verteilt sein, oder es kann mit anderen Raffwerkzeugen wie beispielsweise einer rotierend angetriebenen Innenschnecke gearbeitet werden, wie sie beispielsweise in der DE-PS 21 47 498 gezeigt und beschrieben ist. Welche Art Raffwerkzeug verwendet wird, ist für das hier betrachtete Verfahren unwesentlich, da allen Raffwerkzeugen das Vorschieben des Schlauchhüllenmaterials zum Zwecke des Raffens gemeinsam ist.

Fig.1 zeigt die Anfangsposition des Schlauchhüllenstrangs vor dem Raffen einer neuen Schlauchraupe. Die Quetschwalzen 12 und das Raffwerkzeug 20, nämlich die Raffrollen 22 stehen still, und der Schlauchhüllenstrang 10 erstreckt sich ein wenig über die Raffrollen hinaus, wo er durch die bei 18 eingeleitete Blähluft in Offenstellung mit ringsum etwa gleichgroßem Abstand zum Raffrohr 16 gehalten wird. Das Raffrohr 16 ist mit seinem anderen Ende an einer Halterung 24 angebracht, die in den Fig. 1 bis 3 als Platte angedeutet ist, die durch einen (nicht gezeigten) Kraftzylinder in Längsrichtung des Raffrohres 14 verschoben werden kann. Anstelle der Platte kann das Raffrohr auch mit einem oder mehreren weiteren Raffrohren an einer axial verschieblichen Revolvereinrichtung angebracht sein, wie sie beispielsweise aus der DE-OS 29 24 059 bekannt ist.

Auf dem Raffrohr 16 ist eine Anschlaghülse 26 verschieblich geführt, die zum Raffwerkzeug 20 hin einen verjüngten zylindrischen Abschnitt 28 aufweist. Der am entgegengesetzten Ende der Anschlaghülse 26 verbleibende dickere Bund 30 kann von einem gabelförmigen Greifer 32 erfaßt und über diesen von einem (nicht gezeigten) Kraftzylinder längs dem Raffrohr 16 gesteuert verschoben werden.

In Fig. 1, in welcher das Raffrohr 16 vollständig in das geöffnete Ende des Schlauchhüllenstrangs 10 eingeschoben ist, befindet sich die Anschlaghülse 26 mit ihrem verjüngten Abschnitt 28 unmittelbar vor dem Öffnungsende des Schlauchhüllenstrangs und kann aufgrund der den Strang zentrierenden Blasluft in diesen bis unmittelbar vor das Raffwerkzeug 22 hineingeschoben werden.

Nun werden die Raffrollen 22 durch einen (nicht gezeigten) Antrieb in Drehung versetzt und schieben das Schlauchhüllenmaterial in Richtung zur Anschlaghülse 26 nach vorn. Dabei gleitet zunächst ein Anfangsteil 34 des Schlauchhüllenstrangs 10 auf den verjüngten Abschnitt 28 der Anschlaghülse 26, dessen Querschnitt nur gerinfügig kleiner als der Innenquerschnitt des geöffneten Schlauchhüllenstrangs ausgebildet ist, und bleibt ungerafft. Sobald das vordere Ende des Schlauchhüllenstrangs 10 gegen den Bund 30 stößt, beginnt sich der Schlauchhüllenstrang 10 hinter dem verjüngten Abschnitt 28 der Anschlaghülse 26 in Falten zu legen und bildet eine Schlauchraupe 36, die mit zunehmendem Vorschieben des Schlauchhüllenstrangs immer länger wird, während gleichzeitig die Anschlaghülse 26 diesem Längenzuwachs, vom Greifer 32 gesteuert, ausweicht.

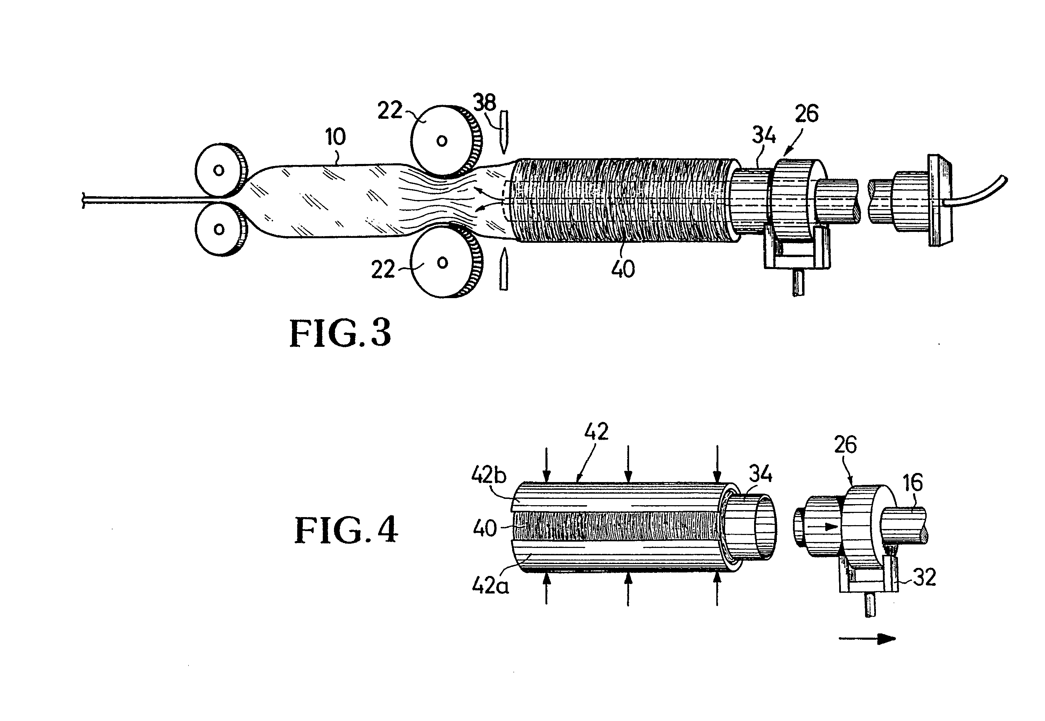

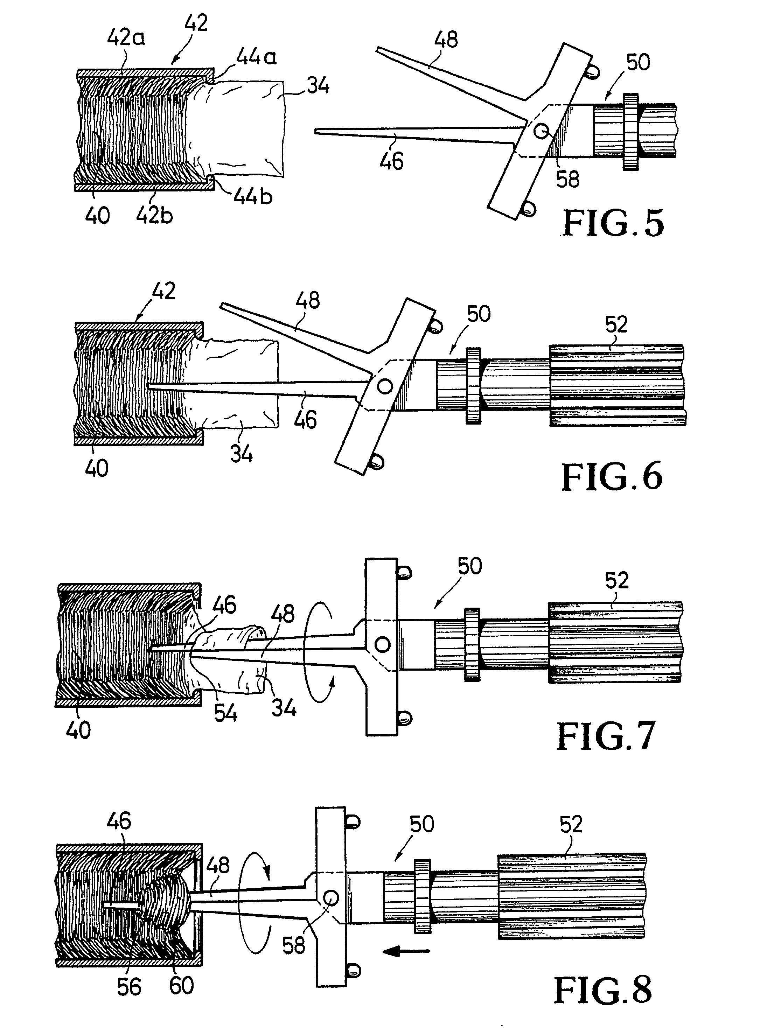

Wenn schließlich, wie in Fig. 3 gezeigt, die gewünschte Raupenlänge erreicht ist, wird der Drehantrieb für die Raffrollen 22 abgeschaltet und das Raffrohr 16 mit der Anschlaghülse 26 eine kurze Strecke nach vorn bewegt, woraufhin die Raupe 36 vom Schlauchhüllenstrang 10 durch eine Schneideeinrichtung, beispielsweise ein Messerpaar 38 oder eine rotierende Messerscheibe zu einer gerafften Verpackungshülle 40 abgetrennt wird. Die abgetrennte Verpackungshülle 40 kann nun auf dem Raffrohr 16, beispielsweise mit Hilfe des oben erwähnten Revolvers, in eine seitlich zum Raffwerkzeug 20 versetzte Stellung gebracht werden, in welcher sie gemäß Fig. 4 derart von einer Halteeinrichtung 42 erfaßt wird, daß der ungeraffte Schlauchhüllenteil 34 am vorderen Ende der Verpackungshülle 40 aus der Halteeinrichtung 42 herausragt. Die Halteeinrichtung 42 besteht aus zwei gegeneinander bewegbaren Halbschalen 42a, 42b, die am vorderen Ende mit je einem radial nach einwärts vorspringenden Bund 44a bzw. 44b versehen sind. Sobald die Halbschalen 42a, 42b die Verpackungshüllen erfaßt haben, werden die Anschlaghülse 26 und das Raffrohr 16 aus der Verpackungshülle 40 herausgezogen, und die Halteeinrichtung 42 wird mit der darin gefaßten Verpackungshülle 40 vor ein Verschließwerkzeug gebracht, um ihr vorderes Ende zu verschliessen, wie dies nachstehend an Hand der Fig. 5 bis 11 erläutert wird.

Fig. 5 zeigt das vordere Ende der in der Halteeinrichtung 42 festgeklemmten Verpackungshülle 40 im Längsschnitt vor dem Verschließwerkzeug, das aus einem mit der Verpackungshülle 40 axial fluchtenden ersten Wickelelement 46 und einem daran schwenkbar angelenkten zweiten Wickelelement 48 besteht. Die Elemente 46, 48 bilden die langgestreckten, dünnen Schenkel einer storchenschnabelförmigen Zange 50, die am Ende eines wellenförmigen Werkzeugträgers 52 befestigt ist.

Das im Verhältnis zum Werkzeugträger 52 unverschwenkbare erste Wickelelement 46 fällt im wesentlichen mit der Achse des Werkzeugträgers 52 und damit auch der Achse der Verpackungshülle 40 zusammen.

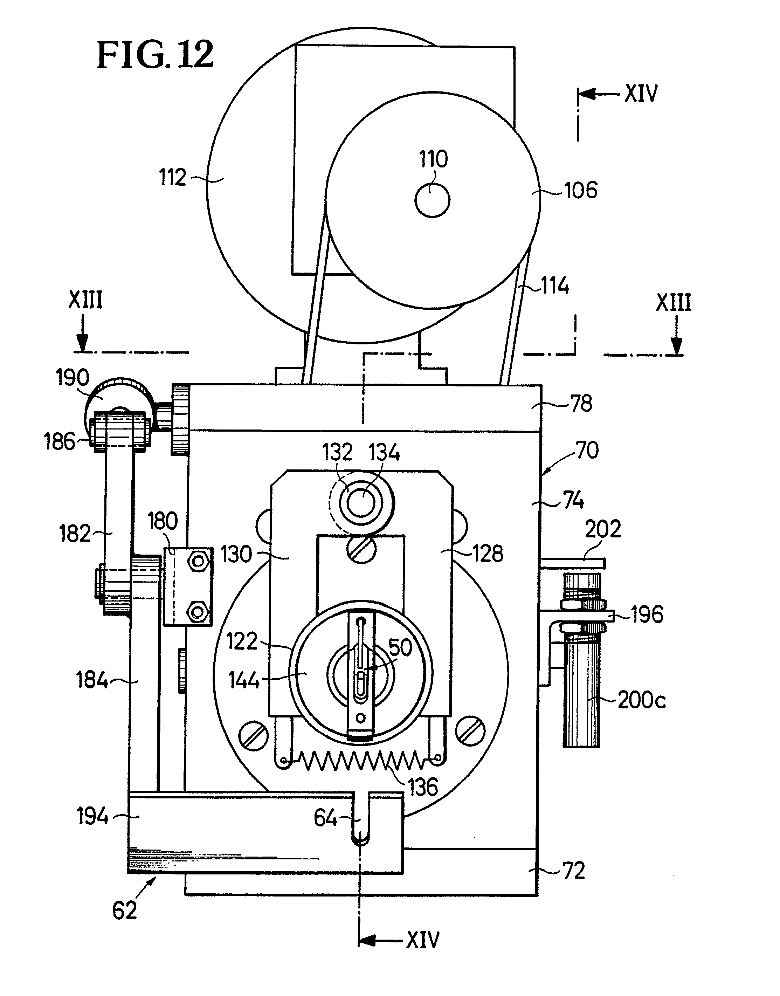

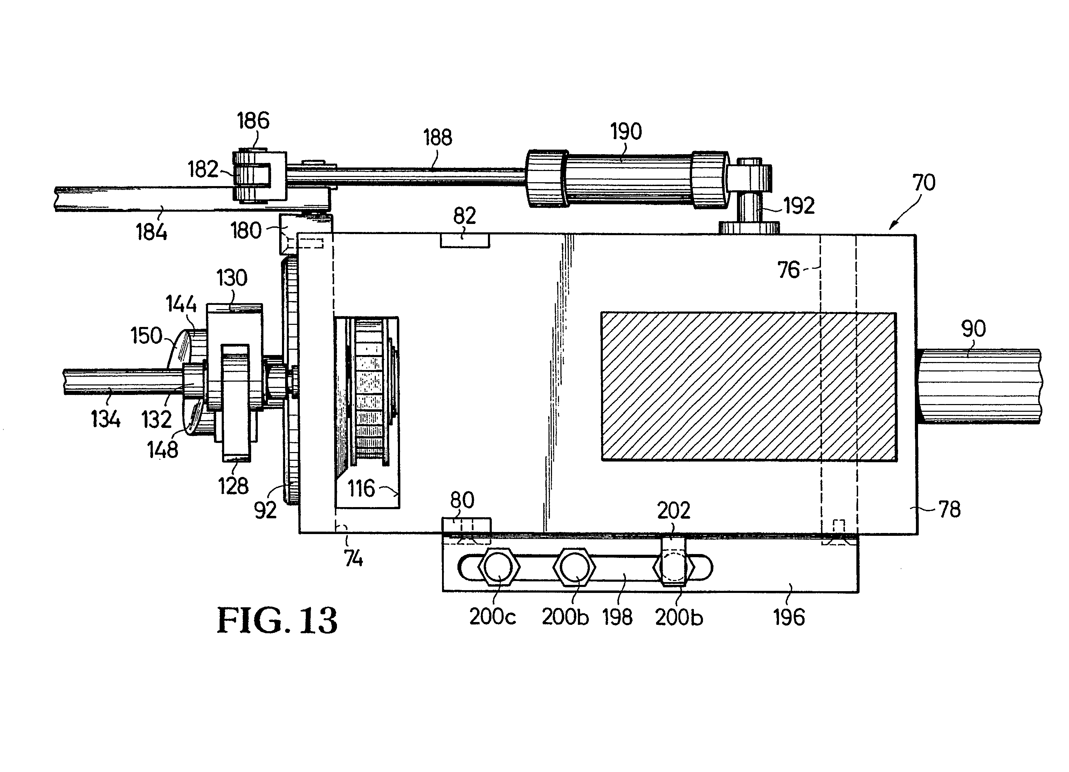

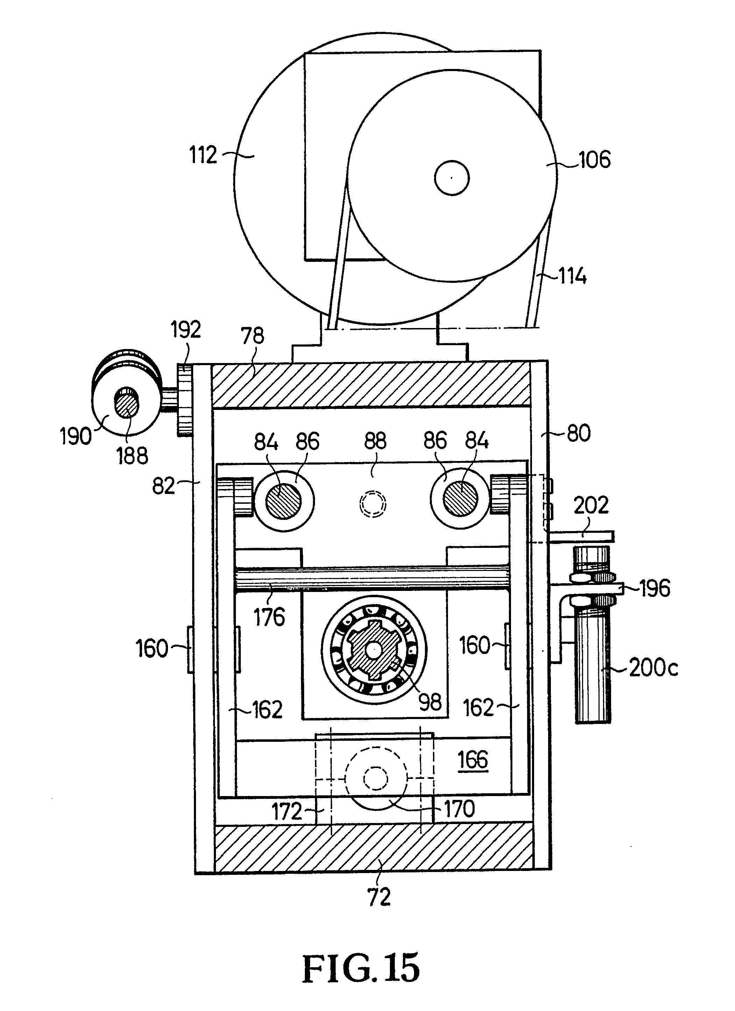

Der Werkzeugträger 52 mit der Zange 50 gehört zu einer Verschließvorrichtung, die an späterer Stelle in Verbindung mit den Figuren 12 bis 16 näher erläutert wird. Mit Hilfe dieser Vorrichtung werden die nachstehend beschriebenen Axial- und Drehbewegungen des Werkzeugträgers sowie das Öffnen und Schließen der Zange erzeugt und gesteuert.

In der in Fig. 5 gezeigten Ausgangsposition nimmt die Zange 50 ihre Offenstellung ein, in welcher der bewegliche Zangenschenkel 48 mit dem festen Zangenschenkel 46 einen Winkel von etwa 25° bis 30° einschließt. In dieser Stellung der Zangenschenkel wird der Werkzeugträger 52 längs seiner Achse ohne Drehung in Richtung auf die von der Halteeinrichtung 42 geklemmte Verpackungshülle 40 vorwärts bewegt, wodurch der feste Zangenschenkel 46 in die Verpackungshülle 40 einfährt. Wenn sein freies Ende etwa 5 bis 10 mm in den Faltenverband der Verpackungshülle 40 eingedrungen ist (Fig. 6), wird die Vorwärtsbewegung des Werkzeugträgers 52 unterbrochen, und dieser wird stattdessen in Drehungen versetzt, wodurch in später beschriebener Weise die Zange 50 während etwa der ersten halben Drehung schließt.

Mit der Schließbewegung der Zange 50 erfaßt der bewegliche Zangenschenkel 48, der wesentlich - beispielweise um 12 mm - kürzer als der feste Zangenschenkel 46 ist, den aus der Halteeinrichtung 42 vorstehenden ungerafften Anfangsteil 34 der Verpackungshülle 40 von außen längs einer Mantellinie und faltet diesen unter gleichzeitiger Mitnahme in Umfangsrichtung nach einwärts ein, wodurch, wie in Fig. 7 bei 54 angedeutet ist, das Schlauchmaterial des Anfangsteils 34 am vorderen Ende des Zangenschenkels 48 abgedreht wird. Diese Abdrehung 54 bildet den Anfang eines Drillzopfes 56, der beim Weiterdrehen der nunmehr geschlossenen Zange 50 und erneutem Einschalten der Vorschubbewegung des Werkzeugträgers 52 auf den beiden Zangenschenkeln 46, 48 unter fortgesetztem Abzug von Hüllenmaterial aus dem Faltenverband der Verpackungshülle 40 in Richtung zum Zangengelenk 58 wandert. Mit der Bildung des Drillzopfes wird gleichzeitig der ungeraffte Anfangsteil 34 in den Drillzopf 56 hineingezogen und von diesem fest umschlossen.

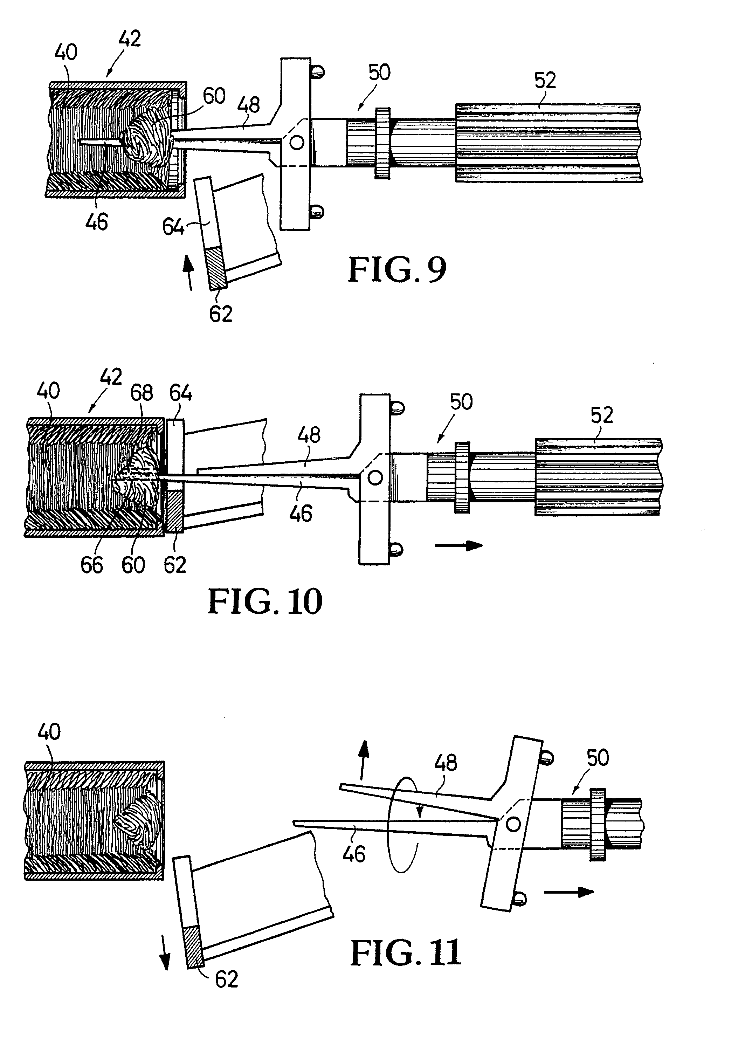

Die Vorwärtsbewegung der Zange 50 erfolgt anfangs verhältnismäßig schnell und wird nach etwa halber Strecke auf später beschriebener Weise stark verzögert. Dadurch entsteht am äußeren Ende des Drillzopfes 56 ein verdickter Knoten 60, der sich im Öffnungsende der Verpackungshülle verkeilt (Fig. 8). Dieser Zustand wird je nach den Abmessungen der Verpackungshülle und der Dicke des Schlauchmaterials nach etwa 5 bis 10 Umdrehungen der Zange erreicht sein, woraufhin Vorschub und Drehung der Zange 50 abgehalten werden.

Nun wird, wie in Fig. 9 gezeigt, ein Rückhalter 62 vor das Öffnungsende der Halteeinrichtung 42 eingeschwenkt, der einen Schlitz 64 von solcher Breite aufweist, daß die Zangenschenkel in ihm Platz finden. Sobald der Rückhalter 62 seine Einschwenk^endstellung erreicht hat, werden die Zangenschenkel 46, 48, deren Klemmkraft nach Beendigung der Zangendrehung nachgelassen hat, wie in Fig. 10 gezeigt, durch eine Rückzugsbewegung des Werkzeugträgers 52 ohne Drehung aus dem vom Rückhalter 62 an der Mitnahme gehinderten Drillzopf 56 herausgezogen und hinterlassen in diesem, wie bei 66 bzw. 68 gestrichelt angedeutet ist, zwei Kanäle, von denen der vom kürzeren Zangenschenkel 48 gebildete Kanal 68 an der oben erwähnten Abdrehstelle 54 endet, während der vom längeren Zangenschenkel 46 gebildete Kanal 66 durchgehend geöffnet ist und dadurch den gewünschten Entlüftungskanal im Drillzopf 56 bildet.

Wenn der Werkzeugträger 52 mit der geschlossenen Zange 50 schließlich gemäß Fig. 11 seine hintere Endeinstellung erreicht hat, wird er kurzfristig in entgegengesetzter Richtung gedreht, wodurch die Zange 50 öffnet. Gleichzeitig wird der Rückhalter 62 wieder in seine Ruhestellung zurückverschwenkt, so daß schließlich alle Teile wieder die Ausgangsposition nach Fig. 5 zum Verschließen einer weiteren Verpackungshülle einnehmen.

Der Werkzeugträger 52 mit der Zange 50 und der Rückhalter 62 sind, wie bereits erwähnt, Teile einer Verschließvorrichtung, die nachstehend der Fig. 12 bis 16 näher erläutert wird. Die Verschließvorrichtung arbeitet mit einer beispielsweise aus der DE-OS 29 26 543 bekannten Halteeinrichtung zusammen, in welcher eine mit einem ungerafften Anfangsteil versehene geraffte Verpackungshülle festgeklemmt ist.

Die Verschließvorrichtung hat gemäß den Fig. 12 bis 15 ein seitlich im wesentlichen offenes Gehäuse 70, das sich aus einer Grundplatte 72, zwei Stirnwänden 74 und 76, einer Deckplatte 78 sowie zwei schmalen seitlichen Lagerplatten 80, 85 zusammensetzt, die mit ihren Enden in Aussparungen der Grundplatte 72 bzw. der Deckplatte 78 eingesetzt sind. Die vorerwähnten Teile 72 bis 82 sind auf nicht gezeigte Weise miteinander verbunden, beispielsweise verschraubt. In den Stirnwänden 74, 76 sind die Enden zweier auf gleicher Höhe symmetrisch zur senkrechten Mittellängsebene des Gehäuses 70 angeordneter Führungsstangen 84 befestigt, auf denen mit Kugelbüchsen 86 eine schlittenartige Brücke 88 längsverschieblich gelagert ist.

Zum Verschieben der Brücke 88 dient ein doppeltwirkender pneumatischer Kraftzylinder 96, dessen Gehäuse in einer Bohrung der hinteren Stirnwand 76 befestigt ist.

Die vordere Stirnwand 74 nimmt in einer kreisförmigen, zentralen Durchbrechung unterhalb der Führungsstangen 84 ein zweiteiliges Lagergehäuse 92 auf, in welchem der Außenring eines Wälzlagers 94 gefaßt ist. Der Innenring des Wälzlagers 94 umschließt eine mit einer Vielkeilbohrung versehenen Hülse 96, in der eine den Werkzeugträger 52 bildende Vielkeilwelle 98 verschieblich, aber drehschlüssig aufgenommen ist. Die Welle 98 endet in einem axialkraftübertragenden Kugellager 100, das in eine Bohrung 102 der in der Mitte nach unten verlängerten Brücke 88 axial unverschieblich eingesetzt ist.

Die Hülse 92 trägt hinter dem Wälzlager 94 eine Zahnriemenscheibe 104. Eine zweite Zahnriemenscheibe 106 sitzt zusammen mit einer am Umfang mit Rippen versehenen Zählscheibe 108 auf der Antriebswelle 110 eines umsteuerbaren elektrischen Getriebemotors 112, der auf der Deckplatte 78 des Gehäuses 70 befestigt ist. Um die beiden Zahnriemenscheiben 104, 106 ist ein Zahnriemen 114 geschlungen, der sich durch eine Öffnung 116 in der Deckplatte 78 erstreckt.

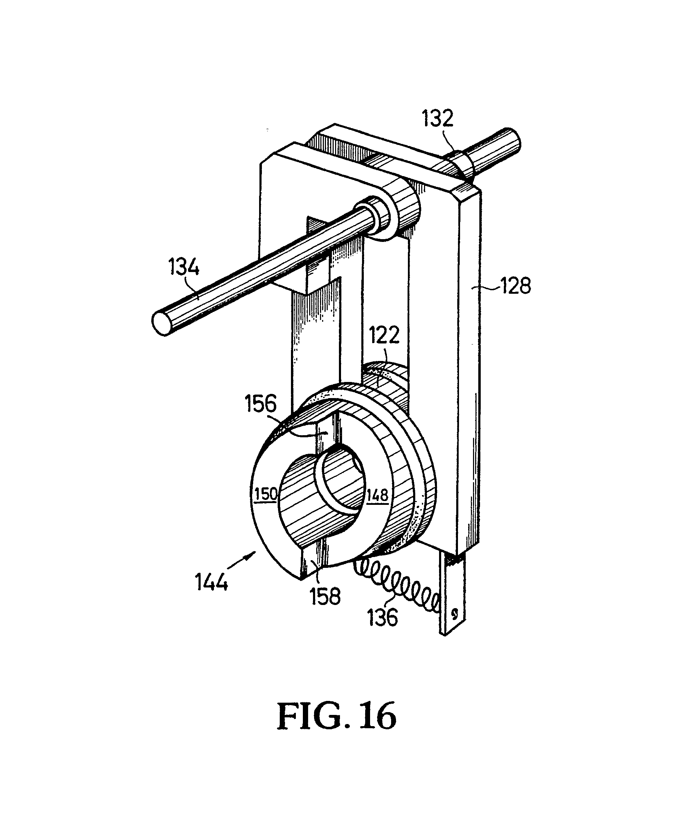

Die Vielkeilwelle 98 enthält am vorderen Ende eine Gewindebohrung, in welche die Zange mit einem Gewindeende 118 eingeschraubt und auf geeignete Weise, z. B. durch einen nicht gezeigten Querstift gegen Herausdrehen gesichert ist. Die Zange 50 hat einen das Gewindeende 118 tragenden wellenförmigen Teil 120, auf dem eine Bremstrommel 122 zwischen einem wellenfesten Bund 124 und einer sich gegen die Vielkeilwelle 98 stirnseitig abstützenden Gleitscheibe 126 aus geeignetem Material wie Polytetrafluoräthylen drehbar gelagert ist. Die Bremstrommel 112 wird, wie insbesondere aus den Fig. 12 und 16 erkennbar ist, von zwei als Bremsbacken ausgebildeten Bremshebeln 128, 130 zangenartig erfaßt, die auf einer Gleit- und Lagerhülse 132 schwenkbar gelagert sind, welche auf einer Führungsstange 130 an der Außenseite der vorderen Gehäusestirnwand 74 längsverschieblich angeordnet sind. Eine zwischen den Enden der Bremshebel 128, 130 abgespannte Schraubenzugfeder 136 erzeugt die erforderliche Bremskraft zur Bildung einer beim Überschreiten eines bestimmten Drehmoments schlüpfenden Reibungsbremse für die Bremstrommel 122.

Der vordere Abschnitt des wellenförmigen Teils 120 der Zange 50 ist bei 138 beidseitig abgeflacht und trägt an seinem Ende den das erste Wickelelement bildenden festen Zangenschenkel 46. Der das zweite Wickelelement bildende bewegliche Zangenschenkel 48 ist etwa im rechten Winkel an einen gestreckten Doppelhebel 140 angeformt, der mit einem mittig darin enthaltenen Schlitz 142 auf den abgeflachten Abschnitt 138 an wellenförmigen Teil 120 der Zange 50 aufgesteckt und durch einen das Gelenk 58 bildenden Bolzen schwenkbar gelagert ist.

Zum Verschwenken des beweglichen Zangenschenkels 48 dient eine ringförmige Kurvenscheibe 144, die mit Schrauben 146 an der Bremstrommel 122 befestigt ist. An der freien Stirnseite der Kurvenscheibe 144 sind zwei sich über jeweils die Hälfte des Umfangs erstreckende Steuerkurven 148, 150 (Fig. 16) angeformt, die mit je einem Angriffsnocken 152, 154 an den Enden des Doppelhebels 140 zusammenwirken. Wenn die Welle 98 bei abgebremster Bremstrommel 122 in die eine oder andere Richtung gedreht wird. Zwischen den Enden der Steuerkurven 148, 150 sind durch deren unterschiedliche axiale Höhen Anschlagschultern 156, 158 gebildet, gegen welche, je nach der Drehrichtung der Welle 98, der eine oder der andere Abgriffsnocken 152 bzw. 154 am Ende seines Weges anschlägt und dadurch bei der Weiterdrehung der Welle 98 in der gleichen Drehrichtung die Kurvenscheibe 142 mit der Bremstrommel 122 unter unter Reibungsschlupf gegenüber den Bremshebeln 128, 130 mitnimmt.

Die Lagerplatten 80, 82 lagern mit Gelenkzapfen 160 innerhalb des Gehäuses 70 je einen Schenkel 162 eines U-förmigen Dämpfungshebels 164, dessen Stegteil 166 über ein mittig angebrachtes Druckglied 168 mit einem Dämpfungszylinder 170 zusammenwirkt, der an der Grundplatte 72 des Gehäuses 70 mittels einer Klemmfassung einstellbar befestigt ist. Der Dämpfungszylinder 170 ist mit Öl gefüllt und enthält eine (nicht gezeigte) Rückstellfeder, welche den Steg 166 in der Ruhestellung gegen einen winkelförmigen Anschlag 174 an der Grundplatte 72 drückt. Zwischen die Schenkel 162 ist eine Querstange 176 eingeschweißt. Die oberen Ende der Schenkel 162 sind verstärkt und bilden mit ihren abgerundeten Hinterkanten Anschlagflächen 178, gegen welche die Brücke 88 beim Vorschub des Werkzeugträgers 52 vor Erreichen ihrer vorderen Endstellung anfährt. Dadurch wird die Weiterbewegung der Brücke 88 und dadurch der Zange 50 in Vorschubrichtung stark verlangsamt.

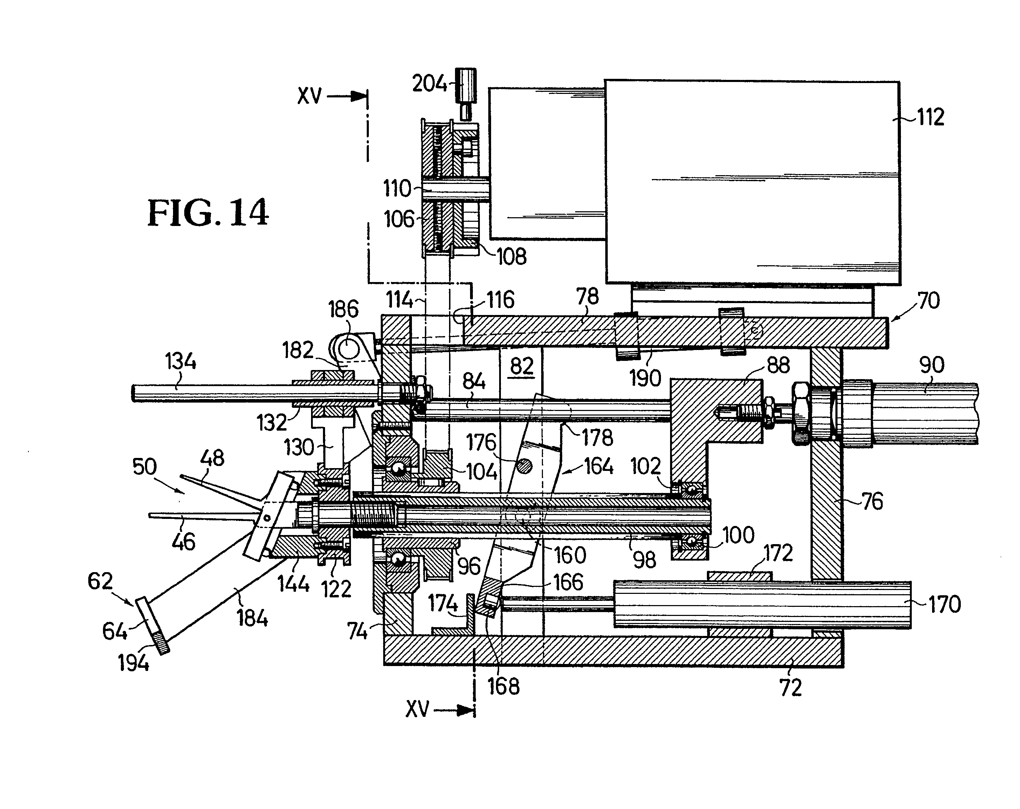

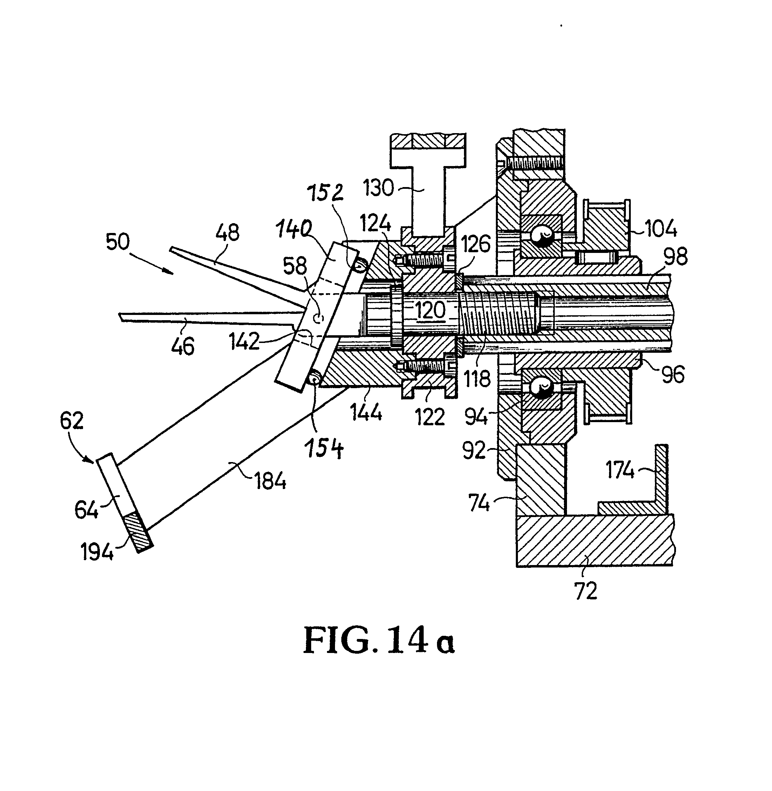

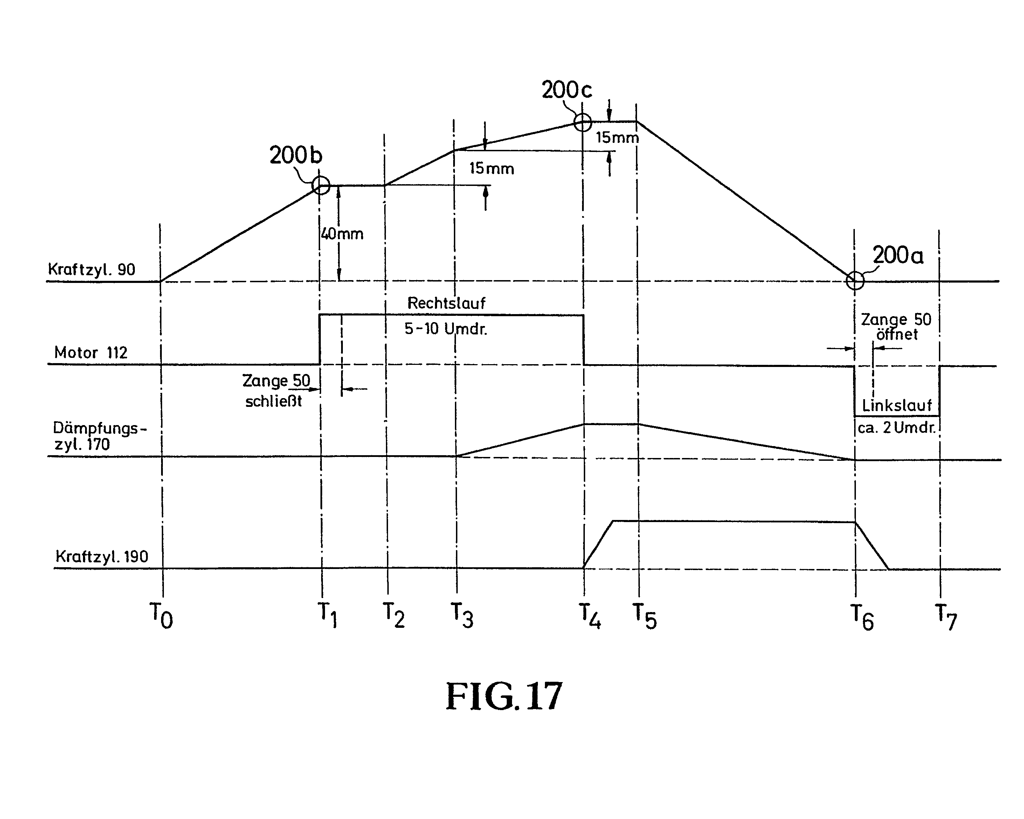

Wie aus Fig. 12 hervorgeht, ist an der, von vorn betrachtet, linken Kante der Gehäusestirnwand 74 ein Lagerbock 180 angeschraubt, an dem zwei miteinander drehfest verbundene Hebel 182, 184 gelagert sind. Die Hebel 182, 184 schließen einen stumpfen Winkel miteinander ein. Der obere Hebel 182 ist über einen Gelenkbolzen 186 mit der Kolbenstange 188 eines doppeltwirkenden Kraftzylinders 190 gekuppelt, dessen Gehäuse mittels eines weiteren Lagerbocks 192 an der Deckplatte 78 angelenkt ist. Der untere Hebel 184 trägt ein Querblech 194, das den oben erwähnten Rückhalter 62 mit dem Schlitz 64 bildet. Durch Aus- und Einfahren des Kraftzylinders 190 wird das Querblech 194 bzw. der Rückhalter 62 aus seiner in Fig. 14 gezeigten Ruhestellung in die in Fig. 10 gezeigte Wirkungsstellung bzw. zurück in die Ruhestellung verschwenkt. An der, von vorn betrachtet, rechten Seite des Gehäuses 70 ist eine L-Profilleiste 196 angeordnet, deren Ende an der Lagerplatte 80 bzw. der hinteren Stirnwand 76 befestigt sind. Die L-Profilleiste 196 enthält in ihrem waagerechten Profilschenkel ein Langloch 198 zur einstellbaren Befestigung von drei elektrischen Impulsgebern 200a, 200b, 200c, die mit einem von der Brücke 88 befestigbaren Betätigungsglied 202 bei der Verschiebung der Brücke 88 berührungslos zusammenwirken. Die Zählscheibe 108 auf der Antriebswelle 110 des Getriebemotors 112 arbeitet mit einem (nicht gezeigten) Meßwandler berührungslos zusammen, dessen Impulse ebenso wie die Impulse der Impulsgeber 200a, 200b, 200c einer (gleichfalls nicht gezeigten) elektrischen Steuereinheit zugeführt und darin verarbeitet werden. Diese steuert die Vorrichtung gemäß dem in Fig. 17 dargestellten Zeitdiagramm in nachfolgend beschriebener Weise, um die anhand der Fig. 5 bis 11 erläuterten Bewegungen der Zange 50 zur Bildung des Endverschlusses auszuführen.

Im Zeitpunkt $T_0$ befindet sich die Vorrichtung in der Anfangsposition, das heißt der Kraftzylinder 90 ist eingefahren und hält die Zange 50 in ihrer zurückgezogenen Stellung gemäß Fig. 5; der Motor 112 ist ausgeschaltet; der Dämpfungszylinder 170 hält mit der eingebauten Rückstellfeder den Dämpfungshebel 164 in Anlage gegen den Anschlag 174; der Kraftzylinder 190 ist ausgefahren, so daß der Rückhalter 62 seine Ruhestellung einnimmt. Die Zange 50 ist in dieser Position geöffnet.

Wenn nun die Halteeinrichtung 42 mit einer darin geklemmten Verpackungshülle 40 vor das Verschließwerkzeug gebracht ist, wird durch einen entsprechenden Kontaktgeber die elektrische Steuereinheit aktiviert und schaltet über ein Steuerventil den Kraftzylinder 90 auf Vorlauf ein. Dadurch wird die Brücke 88 auf den Führungsstangen 84 nach vorn geschoben und nimmt über das Wälzlager 94 und die Vielkeilwelle 98 die Zange 50 mit, so daß der feste Zangenschenkel 46 durch den ungerafften Anfangsteil 34 in die Verpackungshülle 40 einfährt. Außerdem nimmt die Brücke 88 das Betätigungsglied 202 längs der L-Profilleiste 196 mit.

Nach einem Vorschub von beispielsweise 40 mm erreicht das Betätigungsglied 202 im Zeitpunkt $T_1$ den Impulsgeber 200b und bewirkt, daß dieser einen Impuls zur Steuereinheit sendet, durch den die Vorschubbewegung des Kraftzylinders 90 abgeschaltet wird. Damit ist die Stellung der Zange 50 gemäß Fig. 6 erreicht.

Gleichzeitig mit der Abschaltung der Vorschubbewegung wird der Motor 112 auf Rechtslauf eingeschaltet und schließt mit seiner ersten halben Drehung die Zange 50 (Fig. 7). Die Steuereinheit zählt die vom Meßwandler 204 durch die vorbeidrehende Zählscheibe 108 erzeugten Drehwinkelimpulse und schaltet nach ca. 1,5 Umdrehungen im Zeitpunkt $T_2$ den Vorschub des Kraftzylinders 90 erneut ein, wodurch der Drillzopf 56 auf den Zangenschenkeln 46, 48 gebildet wird. Diese Vorschubbewegung erfolgt zunächst ungedämpft, so daß der Drillzopf 56 verhälnismäßig schnell längs der Zangenschenkel in Richtung zum Zangengelenk 58 wandert. Bei $T_3$ trifft jedoch die Brücke 88 auf den Dämpfungshebel 164, und die Vorschubbewegung wird durch den Dämpfungszylinder 170 verlangsamt, so daß, wie oben beschrieben, der Knoten 60 am Drillzopf 56 entsteht (Fig. 8).

Im Zeitpunkt $T_4$ erreicht das Betätigungsglied 202 den Impulsgeber 200c, wodurch die Vorschubbewegung des Kraftzylinders 90 abgeschaltet wird. Gleichzeitig werden auch der Elektromotor 112 stillgesetzt und der Kraftzylinder 190 in Einfahrrichtung betätigt, wodurch der Rückhalter 62 vor die Verpackungshülle 40 verschwenkt wird (Fig. 9).

Nach Ablauf einer bestimmten Zeitspanne durch ein Zeitglied in der Steuereinheit wird im Zeitpunkt $T_5$ der Kraftzylinder 90 in Einfahrrichtung umgeschaltet und zieht die Zangenschenkel 46, 48 aus dem an der Mitnahme durch den Rückhalter 62 gehinderten Drillzopf 56 heraus. Gleichzeitig fährt auch die eingebaute Rückstellfeder den Dämpfungszylinder 190 wieder aus, was jedoch wegen der Öldämpfung langsamer geschieht, und verschwenkt den Dämpfungshebel 164 in die Anschlagstellung gegen den Anschlag 174.

Im Zeitpunkt $T_6$ erreicht das Betätigungsglied 202 den Impulsgeber 200a und bewirkt, daß der Kraftzylinder 90 abgeschaltet wird. Gleichzeitig wird der Elektromotor 112 auf Linkslauf eingeschaltet mit der Folge, daß die zunächst abgebremste Kurvenscheibe 144 die Zange 50 öffnet. Nach höchstens zwei Umdrehungen, nach denen sichergestellt ist, daß die Zange auch tatsächlich geöffnet ist, wird der Motor 112 im Zeitpunkt $T_7$ wieder abgeschaltet und die Vorrichtung hat ihre Anfangsposition wieder erreicht.

Die Schlauchhülle mit dem darin gebildeten Endverschluß kann nun von der Halteeinrichtung 42 freigegeben und einer Ablage zugeführt werden, um einer neuen Verpackungshülle mit einem ungerafften Anfangsteil Platz zu machen.

**Patentansprüche**

1.  Verfahren zum Bilden eines Endverschlusses in Form eines Drillzopfs an einer zu einer Raupe gerafften, schlauchförmigen Verpakkungshülle, insbesondere Wursthülle, wobei ein erstes langgestrecktes Wickelelement in das Innere der Verpackungshülle bis hinter die ersten Raffalten eingeführt, der äußerste Hüllenabschnitt zwischen dem ersten und einem zweiten langgestreckten Wickelelement längs einer axialen Mantellinie erfaßt wird und die Wickelelemente zur Bildung des Drillzopfs innerhalb der Verpackungshülle relativ zu dieser um ihre Längsachse gedreht, axial verschoben und nach Beendigung der Drehbewegung vom Drillzopf zurückgezogen werden, **dadurch gekennzeichnet**, daß an dem zu verschließenden Ende der Verpackungshülle ein ungeraffter Hüllenabschnitt gebildet wird, welcher längs der axialen Mantellinie durch das zweite Wickelelement, das kürzer ist als das erste Wickelelement, von außen an dieses herangeführt wird, und daß die Wickelelemente während der Drehbewegung vorgeschoben werden, wobei innerhalb der Verpackungshülle, vom freien Ende der Wickelelemente nach hinten fortschreitend, der Drillzopf erzeugt und durch das Zurückziehen des längeren Wickelelements aus der durch das Verdrillen zusammengezogenen Öffnung ein Entlüftungskanal freigelegt wird.

2. Verfahren nach Anspruch 1, **dadurch gekennzeichnet**, daß der ungeraffte Hüllenabschnitt am Ende des Heranführens vom zweiten Wickelelement am ersten Wickelelement festgeklemmt wird.

3. Verfahren nach Anspruch 3, **dadurch gekennzeichnet**, daß die Klemmung am Ende der Drehbewegung der Wickelelemente gelockert wird.

4. Verfahren nach einem der vorhergehenden Ansprüche, **dadurch gekennzeichnet**, daß das Drehen der Wickelelemente bereits während des Erfassens und Heranführens des ungerafften Hüllenabschnitts an das erste Wickelelement begonnen wird.

5. Verfahren nach Anspruch 4, **dadurch gekennzeichnet**, daß das axiale Vorschieben der Wickelelemente erst nach dem Heranführen des ungerafften Hüllenabschnitts an das erste Wickelelement eingeleitet wird.

6. Verfahren nach einem der vorhergehenden Ansprüche, **dadurch gekennzeichnet**, daß der ungeraffte Hüllenabschnitt beim Raffen durch Beginn der Faltenlegung mit Abstand zum vorderen Ende des zu raffenden Hüllenmaterials gebildet wird.

7. Vorrichtung zur Bildung eines Endverschlusses in Form eines Drillzopfs mit einem Entlüftungskanal an einer zu einer Raupe gerafften, schlauchförmigen Verpackungshülle mit einem ungerafften Hüllenabschnitt am Ende, bestehend aus einer Halteeinrichtung für die Raupe und einem gesteuert gegen die Halteeinrichtung verschieblichen und drehend antreibbaren, wellenförmigen Werkzeugträger, an dessen Halteeinrichtung zugewandten Ende eine Zange angeordnet ist, **dadurch gekennzeichnet**, daß die Zange zwei ungleich lange Schenkel (46, 48) hat, von denen der längere Schenkel (46) fest mit dem Werkzeugträger (52, 98) verbunden ist und mit dessen Drehachse im wesentlichen fluchtet, während der kürzere Schenkel (48) von radial außen an den längeren Schenkel (46) heranführbar ist, und daß zu einer vom freien Ende der Schenkel (46, 48) nach hinten fortschreitenden Bildung des Drillzopfs (56) der Werkzeugträger (52, 98) mit der geschlossenen Zange (46, 48) gleichzeitig drehbar und axial vorschiebbar ist.

8. Vorrichtung nach Anspruch 7, **dadurch gekennzeichnet**, daß die Zange (50) aus Stahl besteht und die Zangenschenkel (46, 48) mit Titan beschichtet sind.

9. Vorrichtung nach Anspruch 7 oder 8, **dadurch gekennzeichnet**, daß der kürzere Zangenschenkel am längeren Zangenschenkel (48) schwenkbar gelagert und von wenigstens einer zur Achse des Werkzeugträgers (52, 98) koaxialen Kurve (148, 150) steuerbar ist, die während der Anfangsphase der Drehung des Werkzeugträgers (52, 98) gegen Drehung gehalten und anschließend zusammen mit dem Werkzeugträger (52 98) drehbar ist.

10. Vorrichtung nach Anspruch 9, **dadurch gekennzeichnet**, daß zum Halten der Steuerkurve (148, 150) gegen Drehung eine Schlupfbremse (122, 126 bis 136) vorgesehen ist und daß die Steuerkurve (148, 150) an wenigstens einem Umfangsende eine Anschlagschulter (156, 158) zur Mitnahme durch eine am kürzeren Zangenschenkel angeordnete Abgriffseinrichtung (140, 152, 154) aufweist.

11. Vorrichtung nach Anspruch 9 oder 10, **dadurch gekennzeichnet**, daß der kürzere Zangenschenkel (48) im Bereich seiner Schwenkachse (58) mit einem gestreckten Doppelhebel (140) starr verbunden ist, dessen mit Steuernocken (152, 154) versehene Enden an zwei sich über je 180° um die Achse des Werkzeugträgers erstreckenden Steuerkurven (148, 150) zwangsgeführt sind.

12. Vorrichtung nach Anspruch 11, **dadurch gekennzeichnet**, daß die Steuerkurven (148, 150) an einer auf dem Werkzeugträger drehbar gelagerten Trommel (122) angeordnet sind, an deren Mantelfläche zwei federbelastete Bremsbacken (128, 130) angreifen.

13. Vorrichtung nach einem der Ansprüche 8 bis 12, **dadurch gekennzeichnet**, daß der Werkzeugträger (52) von einer in einem ortsfesten Gehäuse (70) axial verschieblich gelagerten und von mindestens einem gehäusefesten Kraftzylinder gegen die geraffte Verpackungshülle vorschiebbaren und nach Bildung des Drillzopfes in die Ausgangsstellung zurückbewegbaren Vielkeilwelle (98) gebildet ist.

14. Vorrichtung nach Anspruch 13, **dadurch gekennzeichnet**, daß die Vielkeilwelle (98) axial verschieblich, aber drehschlüssig eine im Gehäuse (70) gelagerte Antriebshülse (96) durchsetzt, die von einem umsteuerbaren Elektromotor (112) antreibbar ist.

15. Vorrichtung nach Anspruch 14, **dadurch gekennzeichnet**, daß der Elektromotor (112) ein Getriebemotor mit einem Untersetzungsgetriebe ist.

16. Vorrichtung nach einem der Ansprüche 13 bis 15, **dadurch gekennzeichnet**, daß der Kraftzylinder (90) achsparallel zur Vielkeilwelle (98) versetzt angeordnet und über eine auf Führungsstangen (84) gelagerte Brücke (98) mit der Vielkeilwelle gekuppelt ist.

17. Vorrichtung nach Anspruch 16, **dadurch gekennzeichnet**, daß zur Kupplung der Brücke (88) mit der Vielkeilwelle (98) ein axialkraftübertragendes Wälzlager vorgesehen ist.

18. Vorrichtung nach Anspruch 16 oder 17, **dadurch gekennzeichnet**, daß die Vorschubbewegung der Vielkeilwelle (98) in der letzten Phase der Bildung des Drillzopfes durch einen Dämpfungszylinder (170) verzögerbar ist, der von der Brücke (88) über einen im Gehäuse (70) gelagerten Hebel (164) beaufschlagbar ist.

19. Vorrichtung nach einem der Ansprüche 14 bis 16, **dadurch gekennzeichnet**, daß das Ein- und Ausschalten sowie das Umsteuern des Elektromotors (112) und des Kraftzylinders (90) durch elektrische Impulsgeber (200a, 200b, 200c) steuerbar sind, die mit einem mit der Brücke axial verschieblichen Betätigungsglied (202) berührungslos zusammenarbeiten.

20. Vorrichtung nach einem der Ansprüche 13-19, **gekennzeichnet durch** einen am ortsfesten Gehäuse (70) schwenkbar gelagerten und am Ende der Vorschubbewegung des Werkzeugträgers (52) von einem weiteren Kraftzylinder (190) vor die Verpackungshülle (40) und den Drillzopf (56) verschwenkbaren Rückhaltehebel (62) mit einer schlitzförmigen Aussparung (64) zur Aufnahme der Zangenschenkel (46, 48).

FIG.1

FIG.2

FIG.3

FIG.4

EP 0 455 150 A1

FIG.5

FIG.6

FIG.7

FIG.8

FIG. 9

FIG. 10

FIG. 11

## FIG.12

FIG.13

FIG. 14

EP 0 455 150 A1

FIG. 14 a

FIG.15

FIG. 16

FIG.17

EP 0 455 150 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | DE-C-3 711 567  (KOLLROSS)<br>* das ganze Dokument * | 1-7,9-17,<br>19 | A 22 C 13/02 |
| D,Y,A | US-A-4 536 175  (ARNOLD)<br>* Spalte 4, Zeile 38 - Spalte 5, Zeile 65 * | 1-5,7,<br>9-17,20 | |
| P,Y | EP-A-0 386 409  (KOLLROSS)<br>* Anspruch 1; Abbildungen 1-3 * | 6 | |
| A | EP-A-0 114 397  (HOECHST) | | |
| A | US-A-3 162 893  (TOWNSEND) | | |
| A | DE-A-2 719 717  (TEEPAK) | | |
| D,A | DE-A-3 141 782  (KUBO) | | |
| D,A | DE-A-3 405 445  (VISCOFAN) | | |
| D,A | DE-A-2 317 867  (UNION CARBIDE) | | |

RECHERCHIERTE SACHGEBIETE (Int. Cl.5)

A 22 C

Der vorliegende Recherchenbericht wurde für alle Patentansprüche erstellt

| Recherchenort | Abschlußdatum der Recherche | Prüfer |
|---|---|---|
| Den Haag | 06 August 91 | DE LAMEILLIEURE D. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------------
& : Mitglied der gleichen Patentfamilie, übereinstimmendes Dokument